# EUROPEAN PATENT SPECIFICATION

(11) **EP 3 330 174 B1**
(45) Date of publication and mention of the grant of the patent: **30.10.2019**
(21) Application number: 16382587.0
(22) Date of filing: 02.12.2016
(51) Int. Cl.: B64C 3/28, B64C 1/26, B64C 1/06

(54) **AIRCRAFT STABILIZER LEADING EDGE INTEGRATION WITH TORSION BOX AND FUSELAGE**
FLUGZEUGSTABILISATORVORDERKANTENINTEGRATION MIT EINEM TORSIONSKASTEN UND RUMPF
STABILISATEUR D'AÉRONEF AVEC INTÉGRATION DE BORD D'ATTAQUE ET FUSELAGE À CAISSON DE TORSION

(43) Date of publication of application: 06.06.2018
(73) Proprietor: Airbus Operations, S.L., 28906 Getafe Madrid (ES)
(72) Inventor: ARANA HIDALGO, Alberto, 28906 Getafe (ES); MARTINO GONZÁLEZ, Esteban, 28906 Getafe (ES); VÁZQUEZ CASTRO, Jesús Javier, 28906 Getafe (ES); CEBOLLA GARROFE, Pablo, 28906 Getafe (ES)
(74) Representative: Elzaburu S.L.P.

(56) References cited:
- EP-A1- 2 687 436
- EP-A1- 3 000 719
- EP-A2- 1 176 089
- EP-A2- 2 727 824
- WO-A2-2009/118548
- ES-T3- 2 587 910
- FR-A1- 2 918 036
- GB-A- 2 471 408
- US-A1- 2002 195 524
- US-A1- 2015 375 846

## Description

### FIELD OF THE INVENTION

The present invention relates to the integration of the leading edge with the torsion box in aircraft stabilizers.

### BACKGROUND

A known aircraft stabilizer (stabilizer or tail plane) is structured by a leading edge, a torsion box, and a trailing edge.

The leading edge must meet the following requirements:
- Maintain the aerodynamic shape in the front of the torsion box;
- Transfer the aerodynamic forces to the torsion box;
- Maintain the integrity of the torsion box in adverse conditions such as for example in the case of a bird impact;
- Resist erosion during cruise flight;
- Be removable to allow access to the torsion box;
- Provide space for installation of systems and routings.

The torsion box is a primary structure responsible of supporting all loads involved and consists of several structural elements: skins stiffened by stringers on one side and spars and ribs on the other side.

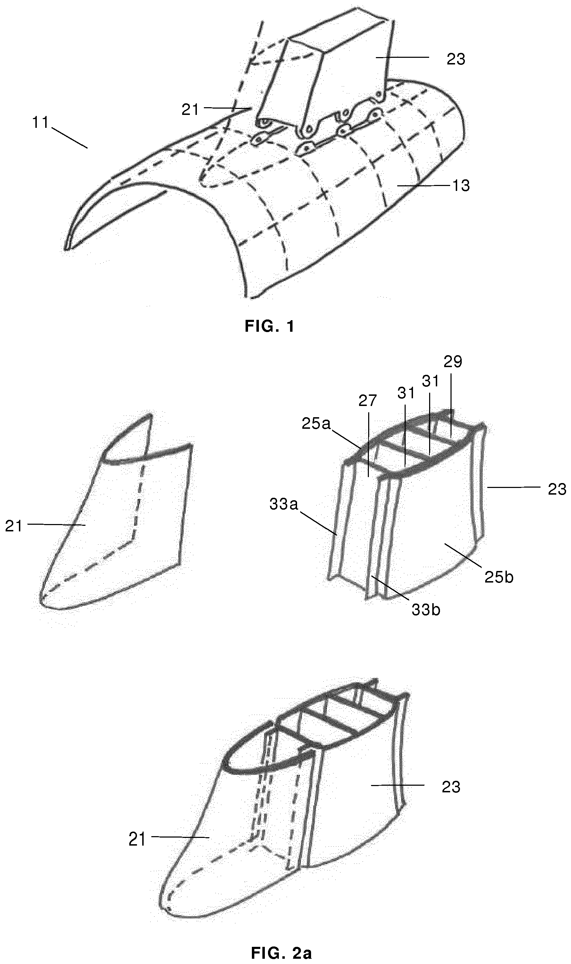

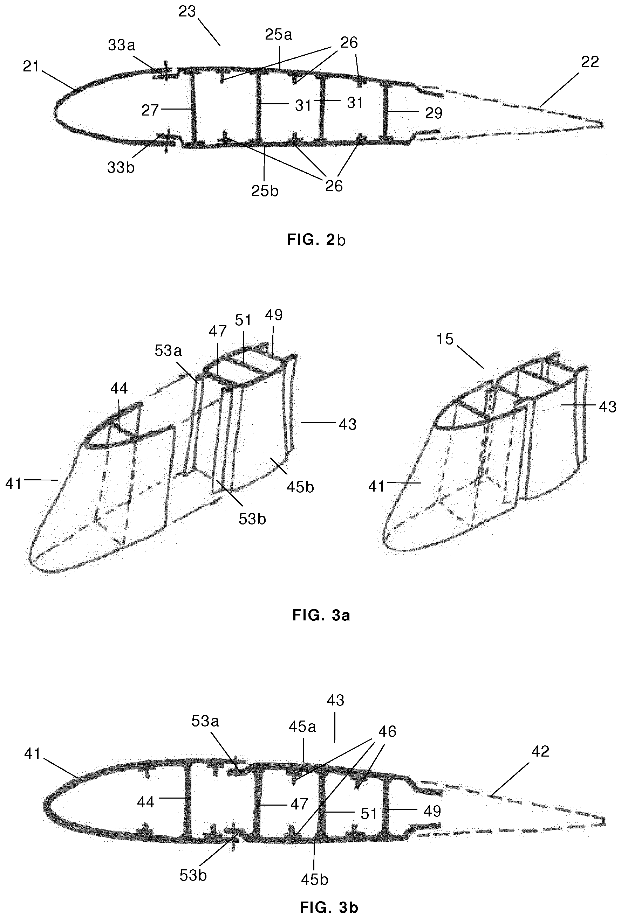

Figures 1, 2a and 2b show a known integration of a leading edge 21 with the torsion box 23 of the stabilizer of an aircraft 11 placed over the rear end of the fuselage 13. The torsion box 23 comprise lateral skins 25a, 25b rigidized by stringers 26, a front spar 27, a rear spar 29 and intermediate spars 31 and the integration is made joining the ends of the leading edge 21 to frontal joggled areas 33a, 33b of the lateral skins 25a, 25b. The stabilizer further comprises a trailing edge 22.

The torsion box 23 is a multi-spar torsion box that can be manufactured by the method disclosed in US 7,806,367 B2.

A drawback of this integration is that the transition from the leading edge 21 to the lateral skins 25a, 25b of the torsion box 23 cause inevitably a reduction of the laminar flow over the aircraft stabilizer due to surface discontinuities, fasteners mount steps or other causes. In other words the laminarity of the flow is reduced as soon as the flow reaches the end of the leading edge 21.

The invention is addressed to the solution of this drawback.

It is known document EP1176089 disclosing a leading edge of supporting surfaces of aircraft. A primary structure (EP) made without ribs is assembled with a specific frontal area (ZF) against impacts. The primary structure comprises two upper and lower covering panels and two diagonal and frontal spars which constitute the strong and rigid structural assembly of the leading edge (BA). The frontal area (ZF) is made up of one or two elemental parts which determine a kind of roof tile which closes the outer aerodynamic contour of the profile of the leading edge (BA) and provides a good behaviour against erosion, operational impacts on the ground and the impact of birds in flight. The invention is applicable to wings, stabilisers and control surfaces of aeroplanes.

It is also known document FR2918036 disclosing a device having a metallic external wall presenting a bowed aerodynamic profile and extending along a wing span direction. A metallic internal wall is connected to lower and upper edges of the wall. The walls define an enclosure extending along the direction. A fixation unit fixes the device to a structural part of the wing and comprises rigid fixation portions. Metallic rigid elements are arranged in the enclosure. The elements and walls form a metallic lattice. The elements are extended between the walls and connected directly/indirectly to the walls.

It is also known document EP2687436 disclosing a method for manufacturing a leading edge profile section of an aircraft lifting surface is provided. The method comprises the following steps: a) providing a set of laminated preforms of a composite material configured with a suitable shape for constituting the leading edge profile section; b) arranging said laminated preforms in a curing tooling and subjecting the assembly to an autoclave cycle to co-cure said laminated preforms; c) demoulding the curing tooling in a spanwise direction towards the aircraft symmetry plane. The invention also comprises a leading edge profile section manufactured by said method comprising in addition to the skin of the leading edge profile section, one or more of the following structural elements: an auxiliary spar, a longitudinal stiffener reinforcing an auxiliary spar, a longitudinal stringer reinforcing the skin of the leading edge profile.

### SUMMARY OF THE INVENTION

The invention refers to aircraft stabilizers and in particular to the integration of the leading edge with the torsion box. The invention provides a stabilizer configuration with the joggled areas of the lateral skins of the torsion box that serve as attachment areas of the leading edge being arranged in a rearward position with respect to the forward most spar of the aircraft stabilizer.

This configuration enlarges the stabilizer area with laminar flow.

In an embodiment the leading edge comprises a spar and the joggled areas are arranged in a rearward position with respect to it.

In another embodiment, the torsion box comprises a rounded front spar, a rear spar and intermediate spars and their lateral skins include recessed areas extending from at least the first intermediate spar to the rounded front spar to allow the accommodation of the leading edge over them. The joggled areas are arranged in said recessed areas in a rearward position with respect to the rounded front spar.

Other characteristics and advantages of the present invention will be clear from the following detailed description of embodiments illustrative of its object in relation to the attached drawings.

### BRIEF DESCRIPTION OF THE DRAWINGS

Figure 1 is a partial schematic perspective view of the upper rear end of an aircraft fuselage illustrating a known joint of the stabilizer to the fuselage and the main components of the stabilizer: the leading edge (in phantom lines) and the torsion box.
Figure 2a shows separate perspective views of the leading edge, the torsion box and the resulting stabilizer in a known configuration.
Figure 2b is a cross sectional view by a horizontal plane of the stabilizer of Figure 2a illustrating the integration of the leading edge with the torsion box.
Figure 3a shows separate perspective views of the leading edge, the torsion box and the resulting stabilizer illustrating an embodiment of the invention.
Figure 3b is a cross sectional view by a horizontal plane of the stabilizer of Figure 3a illustrating the integration of the leading edge with the torsion box.
Figure 4a shows separate perspective views of the leading edge, the torsion box and the resulting stabilizer illustrating another embodiment of the invention.
Figure 4b is a cross sectional view by a horizontal plane of the stabilizer of Figure 4a illustrating the integration of the leading edge with the torsion box.

### DETAILED DESCRIPTION OF THE INVENTION

The invention proposes that the integration of the leading edge with the torsion box takes place in a backward position than in known configurations to enlarge the stabilizer area with a laminar flow (the term backward shall be understood in relation to the fly direction of the aircraft).

In the embodiment illustrated in Figures 3a, 3b, the stabilizer 15 of aircraft 11 comprises a torsion box 43 and a leading edge 41. The torsion box 43 comprise lateral skins 45a, 45b, rigidized by stringers 46, with frontal joggled areas 53a, 53b, a front spar 47, a rear spar 49 and an intermediate spar 51.

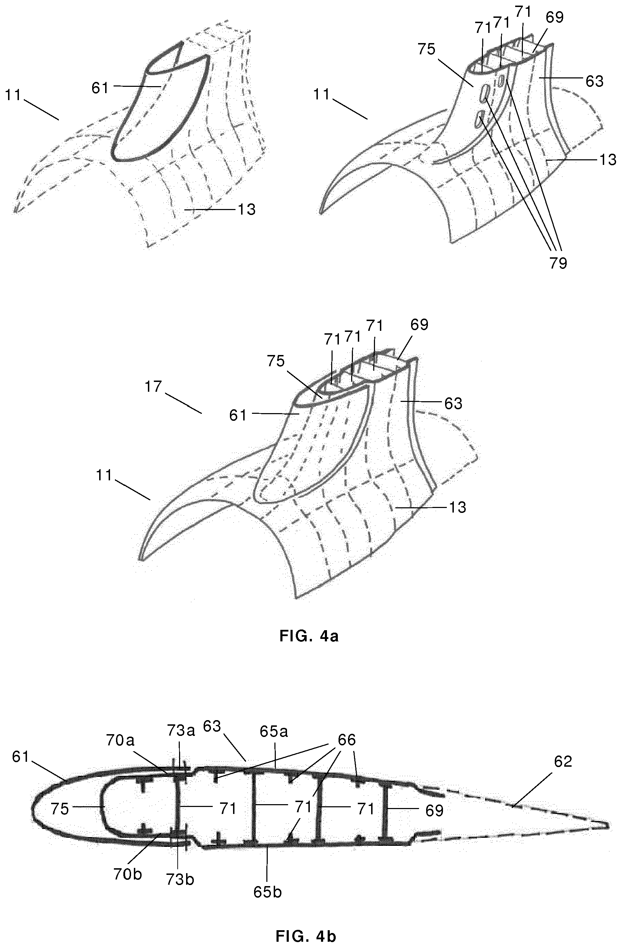

The leading edge 41, that is longer than the leading edge of Figure 2, comprises an spar 44 and is attached to the torsion box 43 (of a lesser size than the torsion box of Figure 2) in the frontal joggled areas 53a, 53b that are placed in a backward position with respect to the frontal joggled areas 33a, 33b of Figure 2 and, in particular, in a backward position with respect to the spar 44 of the leading edge 41. Consequently the stabilizer area with a laminar flow is enlarged. In the embodiment illustrated in Figures 4a, 4b, the stabilizer 17 of aircraft 11 comprises a torsion box 63 and a leading edge 61. The torsion box 63 comprises lateral skins 65a, 65b, rigidized by stringers 66, a rounded front spar 75 (acting as a "false" leading edge of the torsion box), a rear spar 69 and intermediate spars 71.

The lateral skins 65a, 65b include recessed areas 70a, 70b in its frontal section to allow the accommodation of the leading edge 61 over them maintaining the aerodynamic continuity in the external surface of the stabilizer 17.

Said recessed areas 70a, 70b shall cover at least the space comprised between the first intermediate spar 71 (the contiguous spar to the rounded front spar 75) and the rounded front spar 75 and include in its rear end joggled areas 73a, 73b for attaching the leading edge 61 to the torsion box 63.

Access holes 79 at certain locations between the rounded front spar 75 and the first intermediate spar 71 are needed for the installation of attachment means.

Said joggled areas 73a, 73b are thus arranged in a rearward position with respect to the rounded front spar 75.

The main benefit of closing the front portion of the torsion box 63 with a rounded front spar 75 is that it allows the transition of that "false" leading edge to the surface of the fuselage 13. Another advantage of the invention is that simplifies the attachment of the leading edge to the torsion box.

## Claims

1. Aircraft stabilizer (15; 17) comprising a leading edge (41, 61), a torsion box (43, 63) and a trailing edge (42, 62);
- the leading edge (41; 61) being configured with an aerodynamic shape suitable to promote a laminar flow on its surface;
- the lateral skins (45a, 45b; 65a, 65b) of the torsion box (43; 63) including joggled areas (53a, 53b; 73a, 73b) as attachment areas of the leading edge (41; 61); wherein:
- the joggled areas (53a, 53b; 73a, 73b) are arranged in a rearward position with respect to the forward most spar of the aircraft stabilizer (15; 17), **characterised in that**
- the torsion box (63) comprises a rounded front spar (75), a rear spar (69) and intermediate spars (71) and their lateral skins (65a, 65b) include recessed areas (70a, 70b) extending from at least the first intermediate spar (71) to the rounded front spar (75) to allow the accommodation of the leading edge (61) over them;
- the joggled areas (73a, 73b) are arranged in said recessed areas (70a, 70b) in a rearward position with respect to the rounded front spar (75).

2. Aircraft stabilizer (17) according to claim 1, wherein the rounded front spar (75) has a curved shape.

3. Aircraft (11) comprising a stabilizer (15, 17) according to any of claims 1-2.

## Patentansprüche

1. Flugzeugstabilisator (15; 17), umfassend eine Vorder- bzw. Anströmkante (41, 61), einen Torsionskasten (43, 63) und eine Hinter- bzw. Abströmkante (42, 62);
- wobei die Anströmkante (41; 61) mit einer aerodynamischen Form konfiguriert ist, die geeignet ist, eine laminare Strömung auf ihrer Oberfläche zu fördern;
- wobei die lateralen Häute (45a, 45b; 65a, 65b) des Torsionskastens (43; 63) gekröpfte Bereiche (53a, 53b; 73a, 73b) als Anbringungsbereiche der Anströmkante (41; 61) aufweisen; wobei:
- die gekröpften Bereiche (53a, 53b; 73a, 73b) in Bezug auf den vordersten Holm des Flugzeugstabilisators (15; 17) in einer hinteren Position angeordnet sind, **dadurch gekennzeichnet, dass**
- der Torsionskasten (63) einen abgerundeten vorderen Holm (75), einen hinteren Holm (69) und Zwischenholme (71) umfasst und deren laterale Häute (65a, 65b) vertiefte Bereiche (70a, 70b) aufweisen, die sich von zumindest dem ersten Zwischenholm (71) zu dem abgerundeten vorderen Holm (75) erstrecken, um die Aufnahme der Anströmkante (61) über diesen zu ermöglichen;
- die gekröpften Bereiche (73a, 73b) in den vertieften Bereichen (70a, 70b) in Bezug auf den abgerundeten vorderen Holm (75) in einer hinteren Position angeordnet sind.

2. Flugzeugstabilisator (17) nach Anspruch 1, wobei der abgerundete vordere Holm (75) eine gekrümmte Form aufweist.

3. Flugzeug (11), umfassend einen Stabilisator (15, 17) nach einem der Ansprüche 1-2.

## Revendications

1. Stabilisateur d'aéronef (15; 17) comprenant un bord d'attaque (41, 61), une boîte de torsion (43, 63) et un bord de fuite (42, 62);
- le bord d'attaque (41; 61) étant configuré avec une forme aérodynamique adaptée pour favoriser un écoulement laminaire sur sa surface;
- les revêtements latéraux (45a, 45b ; 65a, 65b) de la boîte de torsion (43 ; 63) comprennent des zones d'embrèvement (53a, 53b ; 73a, 73b) comme zones de fixation du bord d'attaque (41 ; 61) ; dans lequel :
- les zones d'embrèvement (53a, 53b; 73a, 73b) sont disposées en position arrière par rapport au longeron le plus à l'avant du stabilisateur d'aéronef (15; 17), **caractérisé en ce que**
- la boîte de torsion (63) comprend un longeron avant arrondi (75), un longeron arrière (69), et des longerons intermédiaires (71) et leurs revêtements latéraux (65a, 65b) comprenant des zones en retrait (70a, 70b) s'étendant du au moins le premier longeron intermédiaire (71) au longeron avant arrondi (75) pour permettre le logement du bord d'attaque (61) par-dessus eux;
- les zones d'embrèvement (73a, 73b) sont disposées dans lesdites zones en retrait (70a, 70b) dans une position arrière par rapport au longeron avant arrondi (75).

2. Stabilisateur d'aéronef (17) selon la revendication 1, dans lequel le longeron avant arrondi (75) a une forme incurvée.

3. Aéronef (11) comprenant un stabilisateur (15, 17) selon l'une quelconque des revendications 1-2.
